(19) **Europäisches Patentamt / European Patent Office / Office européen des brevets**

(11) **EP 4 717 475 A1**

(12) **EUROPEAN PATENT APPLICATION**

(43) Date of publication:
01.04.2026 Bulletin 2026/14

(21) Application number: 25205376.4

(22) Date of filing: 29.09.2025

(51) International Patent Classification (IPC):
*B60G 3/20* (2006.01)   *B60G 21/05* (2006.01)
*B60G 21/055* (2006.01)

(52) Cooperative Patent Classification (CPC):
**B60G 21/05; B60G 3/20; B60G 21/055;
B60G 21/0553; B60G 21/0558;** B60G 2204/82;
B60G 2300/27

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 30.09.2024 GB 202414377

(71) Applicant: **McLaren Automotive Limited
Woking, Surrey GU21 4YH (GB)**

(72) Inventors:
• **Henry, Paul**
  **Woking, GU21 4YH (GB)**
• **Paine, Stephen**
  **Woking, GU21 4YH (GB)**
• **Fortina, Andrea**
  **Woking, GU21 4YH (GB)**
• **Wakelam, Gareth**
  **Woking, GU21 4YH (GB)**
• **Belluomo, Carlo**
  **Woking, GU21 4YH (GB)**

(74) Representative: **Slingsby Partners LLP
1 Kingsway
London WC2B 6AN (GB)**

(54) **SUSPENSION SYSTEM**

(57)     A vehicle comprising: a vehicle body; first and second wheel assemblies each having a rotation axis; first and second suspension linkages, each suspension linkage coupling a respective wheel assembly to the vehicle body to permit motion of the rotation axis of that wheel assembly relative to the vehicle body; a cross-vehicle spring having a first attachment point coupled to the first suspension linkage and a second attachment point coupled to the second suspension linkage; an active link coupling the first attachment point to the first suspension linkage, the active link being configured to have: (i) a first mode in which the active link permits motion of the first suspension linkage relative to the first attachment point so that the cross-vehicle spring and the active link together constrain motion of the first and second suspension linkages with a first spring rate during common motion of the first and second suspension linkages; and (ii) a second mode in which the active link fixes the motion of the first suspension linkage relative to the first attachment point so that the cross-vehicle spring and the active link together constrain motion of the first and second suspension linkages with a second spring rate during common motion of the first and second suspension linkages; wherein the first spring rate is different to the second spring rate.

FIG. 1

**Description**

This invention relates to a vehicle having a cross-vehicle spring and active link.

A typical road vehicle comprises a suspension linkage between each wheel of the vehicle and a vehicle body. The suspension linkages support the body of the vehicle by connecting the respective wheel to the body of the vehicle. Each wheel is typically mounted on bearings and the bearings are attached to the body of the vehicle via the suspension linkages. The suspension linkages support the body against those bearings and thus against the wheel.

Each suspension linkage is designed to permit the wheels of the vehicle to move relative to the body of the vehicle. This movement of the wheels enables the vehicle body to be at least partially isolated from displacements of the wheels relative to the vehicle body. The displacement range provided by the suspension linkages of each wheel, relative to the vehicle body, is generally limited. This limitation normally stems from the packaging of the suspension systems in the vehicle. For example, the wheels are normally located in wheel arches of the vehicle body and thus the wheels can only move upwards a certain distance before coming in to contact with the interior of the wheel arches. Therefore, the motions of the wheels are generally constrained to avoid this happening. Vehicles typically comprise at least one damper which is used to constrain the motion of the suspension linkage which in turn constrains the motion of the respective wheel.

It is increasingly common for vehicles to have selectable dynamic modes which change the operating parameters for the vehicle. This is particularly true with high performance vehicles such as sports cars. These dynamic modes can be tailored to different driving situations for the vehicle, such as a comfort mode for driving on the public roads and a race mode for driving on a track and/or when the driver wants to drive enthusiastically. These different situations call for different control strategies when it comes to controlling the constraint of the wheels. This is because in a comfort mode there is generally a desire to have more compliant suspension that prioritises passenger comfort over vehicle performance and in a race mode there is generally a desire to prioritise vehicle performance over passenger comfort.

Therefore, it would be desirable for there to be an improved suspension system for a vehicle which provides different constraint strategies for the wheels in different operating situations.

According to a first aspect of the present invention there is provided a vehicle comprising: a vehicle body; first and second wheel assemblies each having a rotation axis; first and second suspension linkages, each suspension linkage coupling a respective wheel assembly to the vehicle body to permit motion of the rotation axis of that wheel assembly relative to the vehicle body; a cross-vehicle spring having a first attachment point coupled to the first suspension linkage and a second attachment point coupled to the second suspension linkage; an active link coupling the first attachment point to the first suspension linkage, the active link being configured to have: (i) a first mode in which the active link permits motion of the first suspension linkage relative to the first attachment point so that the cross-vehicle spring and the active link together constrain motion of the first and second suspension linkages with a first spring rate during common motion of the first and second suspension linkages; and (ii) a second mode in which the active link fixes the motion of the first suspension linkage relative to the first attachment point so that the cross-vehicle spring and the active link together constrain motion of the first and second suspension linkages with a second spring rate during common motion of the first and second suspension linkages; wherein the first spring rate is different to the second spring rate.

The first spring rate may be lower than the second spring rate. The first and second wheel assemblies may be rear wheel assemblies and are located on opposite sides of a longitudinal centreline of the vehicle.

The vehicle may comprise a fixed link coupling the second attachment point to the second suspension linkage. The cross-vehicle spring may be a torsion bar. The cross-vehicle spring may comprise: a central portion running across the vehicle; a first connection portion angled relative to the central portion in a first direction, the first connection portion comprising the first attachment point; and a second connection portion angled relative to the central portion in a second direction, the second connection portion comprising the second attachment point. A common rotation of the first and second connection portions may cause the central portion of rotate. An opposite rotation of the first and second connection portions may cause a reaction force to be applied to the first and second connection portions by the central portion. The first and second directions may be opposite.

The cross-vehicle spring may be a z-bar.

The first attachment point may be coupled to a first link attachment point of the active link and the first suspension linkage may be coupled to a second link attachment point of the active link; in the first mode the active link may have a variable length between the first and second link attachment points and in the second mode the active link may have a fixed length between the first and second link attachment points. The active link may comprise: a cylinder comprising a chamber; a piston moveable along the chamber, the piston dividing the chamber into a first volume and a second volume; and a fluid pathway connected between the first volume and the second volume, the fluid pathway comprising a variable restriction so that in the first mode the variable restriction permits fluid to pass between the first volume and the second volume and in the second mode the variable restriction prohibits fluid from passing between the first volume and the second volume.

The active link may comprise a link spring. In the first mode the motion of the first suspension linkage relative to the first attachment point may permit the link spring to constrain motion of the first and second suspension linkages. In the first mode the variable length between the first and second link attachment points may permit the link spring to constrain motion of the first and second suspension linkages. In the second mode the fixed length between the first and second link attachment points may prohibit the link spring from constraining the motion of the first and second suspension linkages. The cross-vehicle spring may have a third spring rate, the link spring may have a fourth spring rate, and the first spring rate may be a combination of the third and fourth spring rates.

The cross-vehicle spring may have a third spring rate, and the second spring rate may be formed from the third spring rate. The vehicle may comprise first and second dampers, each damper may be coupled to a respective suspension linkage to constrain the motion of the associated wheel assembly by applying a damper force to the suspension linkage. Each damper may be coupled between a respective suspension linkage and the vehicle body. Each suspension linkage may comprise first and second suspension links, each suspension link may couple the respective wheel assembly to the vehicle body, the first damper may be coupled to one of the first and second suspension links of the first suspension linkage, the first attachment point may be coupled to the other of the first and second suspension links of the first suspension linkage, the second damper may be coupled to one of the first and second suspension links of the second suspension linkage, and the second attachment point may be coupled to the other of the first and second suspension links of the second suspension linkage. Each damper may comprise a damper spring contributing to the damper force applied by the damper, a first spring seat and a second spring seat, the damper spring may run between the first spring seat and the second spring seat. The second spring seat may be adjustable between a raised position and a lowered position, and the vehicle may be configured to cause the second spring seat to be in the raised position when the active link is in the first mode and the vehicle may be configured to cause the second spring seat to be in the lowered position when the active link is in the second mode.

The cross-vehicle spring may run between opposite sides of a longitudinal centreline of the vehicle. The first and second attachment points may be to either side of a longitudinal centreline of the vehicle. The common motion may be a vehicle heave motion.

In the first mode the cross-vehicle spring may permit opposite motion of the first and second suspension linkages without the cross-vehicle spring and active link together constraining the first and second suspension linkages with the first spring rate. In the second mode the cross-vehicle spring may permit opposite motion of the first and second suspension linkages without the cross-vehicle spring and active link together constraining the first and second suspension linkages with the second spring rate. The opposite motion may be a vehicle roll motion.

The present invention will now be described by way of example with reference to the accompanying drawings. In the drawings:

Figure 1 shows a schematic plan view of a vehicle with a suspension system.

Figure 2 shows a schematic view of the suspension system of the vehicle from behind the suspension system.

Figure 3 shows a schematic view of the suspension system of the vehicle from in front of the suspension system.

Figure 4 shows a close-up view of a damper.

Figure 5 shows an active link.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

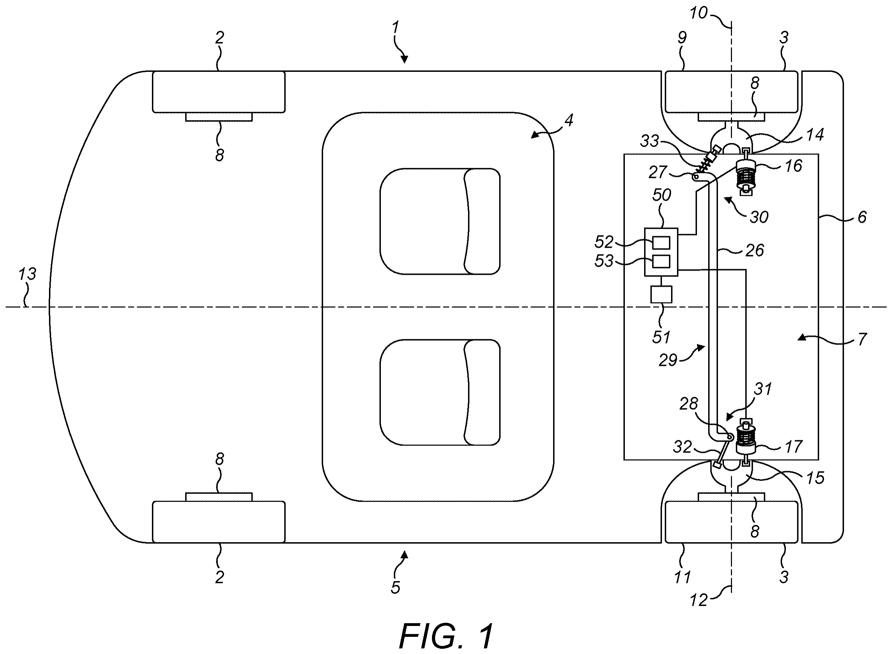

Figure 1 shows a vehicle 1. The vehicle 1 may be an automobile. The vehicle 1 may be a car. The vehicle 1 comprises front wheels 2 and rear wheels 3. The front of the vehicle is defined with reference to the primary motion direction of the vehicle 1. The front of the vehicle 1 points in the primary motion direction of the vehicle 1. Generally, a vehicle has a primary motion directions that is the forward direction. The vehicle 1 comprises an occupant compartment shown generally at 4. The occupant compartment 4 may comprise one or more seats for occupants of the vehicle to sit in. The occupant compartment 4 may accommodate a driver. The occupant compartment may accommodate one or more passengers. The vehicle 1 may comprise controls located within the occupant compartment to enable an occupant to control the motion of the vehicle. The occupant compartment may also be known as a passenger compartment.

The vehicle comprises a vehicle body 5. The vehicle body 5 comprises a plurality of body panels. For example, the body panels may include bonnet panel(s), side door panel(s), and rear deck panel(s). The vehicle body 5 has an outer surface made up of the outer surface of the body panels. The outer surface of the vehicle body 5 defines the exterior surface of the vehicle 1. The vehicle body 5 also comprises a plurality of structural components which support various vehicle components and the body panels. The vehicle body 5 may form the occupant compartment 4. A schematic example of a structural component 6 is shown as part of the vehicle body 5. It will be understood that whilst this is shown as a single block it could be formed of multiple components and potentially take the form of some vehicle components such as an engine or electric motor.

The vehicle comprises a suspension system 7 for supporting the vehicle body 5 on the wheels 3. The suspension system 7 shown in figure 1 is located at the rear of the vehicle 1. Therefore, the suspension system 7 may be a rear suspension system. Whilst it is pictured at the rear of the vehicle 1 it will be appreciated that the suspension system could also be positioned at the front of the vehicle 1. In this case, the suspension system 7 may be a front suspension system. In this case the suspension system 7 supports the vehicle body on the front wheels 2.

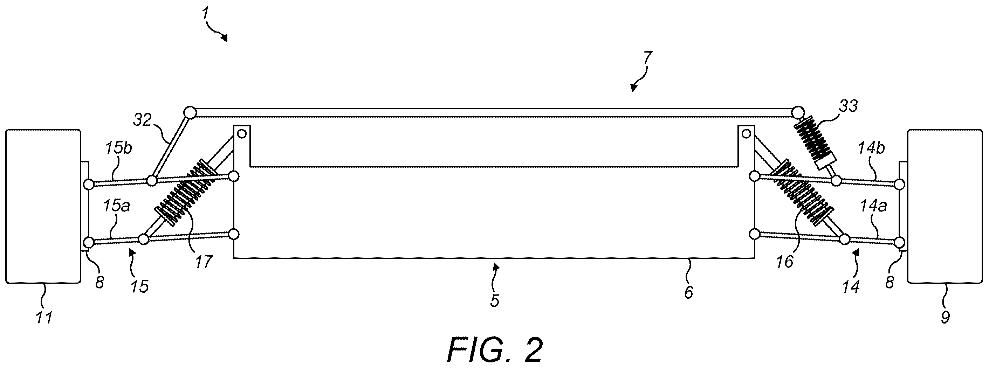

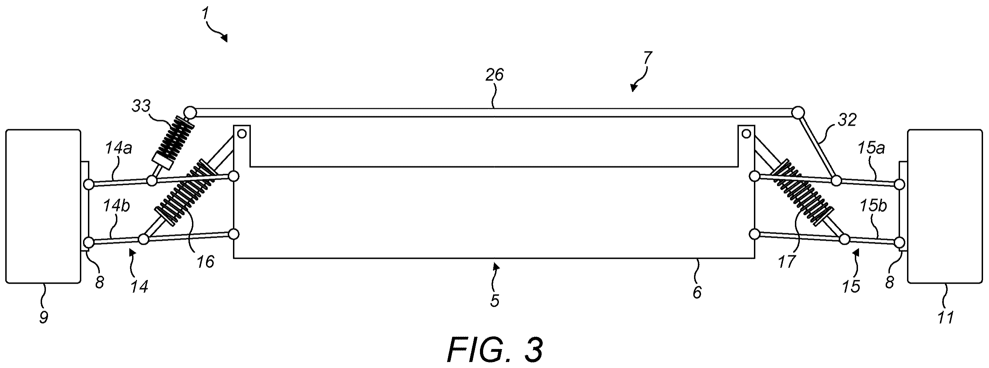

Various components form part of the suspension system 7 as will be described in relation to the vehicle shown in figures 1 to 3. Figures 2 and 3 show schematic drawings of the vehicle 1. Figure 2 views the suspension system 7 on the vehicle 1 from behind the suspension system 7. I.e. as viewed looking from a position generally looking towards the rear end of the vehicle 1. Figure 3 views the suspension system 7 on the vehicle 1 from in front of the suspension system 7. I.e. as viewed looking from a position generally located in the occupant compartment 4 of the vehicle 1.

Each wheel 2, 3 is typically mounted on bearings 8. Each wheel 2, 3 can rotate about a rotation axis to permit movement on a motion surface such as a road. This rotation axis may be defined by wheel bearing 8. The wheel 2, 3 together with ancillary items such as bearings 8 and, for example, a wheel brake together forms a wheel assembly. Thus, each wheel assembly may have a rotation axis associated with it about which the wheel assembly turns to permit movement on the motion surface.

The vehicle 1 comprises a first wheel assembly 9 having a rotation axis 10. The vehicle 1 comprises a second wheel assembly 11 having a rotation axis 12. As shown in figure 1, the first and second wheel assemblies 9, 11 may be rear wheel assemblies. The first and second wheel assemblies 9, 11 may be front wheel assemblies. The first and second wheel assemblies 9, 11 are located on opposite sides of a longitudinal centreline 13 of the vehicle 1.

The vehicle 1 comprises a first suspension linkage 14. The vehicle comprises a second suspension linkage 15. Each suspension linkage 14, 15 couples a respective wheel assembly 9, 11 to the vehicle body 5 to permit motion of the rotation axis of that wheel assembly 9, 11 relative to the vehicle body 5. There is therefore one suspension linkage 14, 15 per wheel.

The suspension linkage 14, 15 may be constituted by a single link. It will be appreciated that the suspension linkage 14, 15 may be constituted by a more complicated arrangement of linkages to couple each wheel 2 to the vehicle body 5 as required by the particular motion requirements of the wheels. For instance, suspension linkage 14, 15 may be a wishbone linkage as illustrated in figure 1. The suspension linkage 14, 15 may be a multi-link suspension linkage as shown in figures 2 and 3. The suspension linkage 14, 15 may be a double wishbone linkage. As shown in figures 2 and 3, each suspension linkage 14, 15 comprises first and second suspension links 14a, 14b, 15a, 15b. Thus, the first suspension linkage 14 comprises first and second suspension links 14a, 14b and the second suspension linkage 15 comprises first and second suspension links 15a, 15b. Each suspension link 14a, 14b, 15a, 15b couples their associated respective wheel assembly 9, 11 to the vehicle body 5.

The suspension linkages 14, 15 are pivotally coupled to their respective wheel assembly. The suspension linkages 14, 15 are pivotally coupled to the vehicle body 5.

To control the motion of the wheel 3, relative to the vehicle body 5, over the suspension linkage's 14, 15 motion range, the vehicle 1 may comprise at least one damper. The vehicle 1 may comprise a first damper 16. The vehicle 1 may comprise a second damper 17. Each damper 16, 17 is coupled to a respective suspension linkage to constrain the motion of the associated wheel assembly by applying a damper force to the suspension linkage. The dampers 16, 17 each constrain the motion of the suspension linkage 14, 15 over the motion range. Alternatively, or as well as, the damper 16, 17 may be coupled between elements of the suspension linkage to constrain the motion of the suspension linkage 14, 15.

The first damper 16 may be coupled to one of the first and second suspension links 14a, 14b of the first suspension linkage 14. The first damper 16 may be coupled to the first suspension link 14a of the first suspension linkage 14. The first damper 16 may be coupled to the second suspension link 14b of the first suspension linkage 14. The first damper 16 may be coupled to the lower of the first and second suspension links 14a, 14b. The second damper 17 may be coupled to one of the first and second suspension links 15a, 15b of the second suspension linkage 15. The second damper 17 may be coupled to the first suspension link 15a of the second suspension linkage 15. The second damper 17 may be coupled to the second suspension link 15b of the second suspension linkage 15. The second damper 17 may be coupled to the lower of the first and second suspension links 15a, 15b.

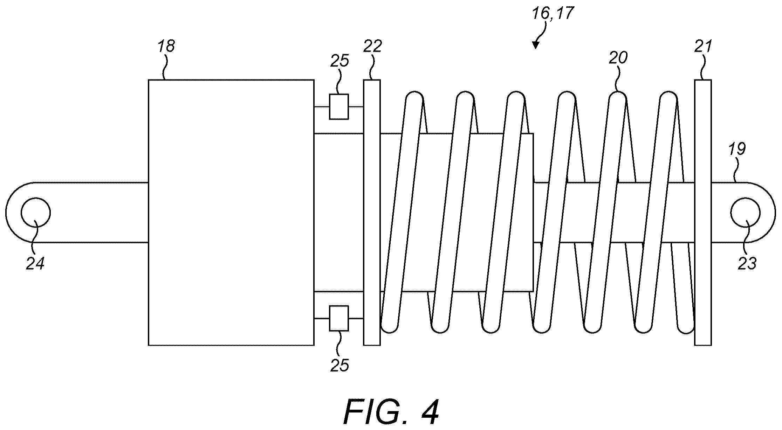

Figure 4 shows a close-up view of a damper 16, 17 and thus shows it in more detail. The damper 16, 17 comprises a damper body 18. The damper 16, 17 comprises a damper rod 19. The damper rod 19 projects from the damper body 18. The damper rod 19 passes inside the damper body 18. The damper body 18 defines a cylinder inside the damper 16, 17. At least one piston is present inside the cylinder. The damper rod 19 is attached to the piston inside the damper body 18. The damper 16, 17 may be a two-chamber damper. In this case, two pistons are present inside the cylinder and the cylinder is divided into two fluidly independent chambers with a piston in each chamber. Such a two-chamber damper may permit heave response to be controlled separately to roll response. The damper 16, 17 may be a hydraulic damper and the damper force may be controlled by controlling the inflow and outflow of hydraulic fluid from the damper unit.

Each damper 16, 17 comprises a damper spring 20. The damper spring 20 contributes to the damper force that is applied by damper 16, 17. The damper spring 20 runs between a first spring seat 21 attached to the damper rod 19 and a second spring seat 22 attached to the damper body 18. The damper spring 20 can thus apply force to the two spring seats which in turn contributes to the damper force.

The damper 16, 17 may have an adjustable length. This means that the at rest extension of the damper rod 19 relative to the damper body 18 is adjustable. The adjustment may be implemented by changing the amount of fluid present to each side of the one or more pistons present inside the damper. To ensure that the preload on the damper spring 20 remains constant the second spring seat 22 may be adjustable. This permits the length of the damper spring 20 at rest to remain constant. The position of the second spring seat 22 relative to the damper body 18 may be adjustable. The second spring seat 22 may be moveable relative to the damper body 18. Thus, when the length of the damper 16, 17 is reduced the second spring seat 22 may be moved away from the end of the damper rod 19 which extends from the damper body 18 and when the length of the damper 16, 17 is increased the second spring seat may be moved towards the end of the damper rod 19 which extends from the damper body 18. The damper 16, 17 comprises a first attachment point 23 located on the damper rod 19 and a second attachment point 24 located on the damper body 18. The length of the damper may be defined as the distance between the first and second attachment points.

The second spring seat 22 may be moved by an actuator 25. The actuator 25 may take any suitable form such as a linear actuator. The actuator may be powered by any suitable means such as electrically or hydraulically.

The vehicle 1 comprises a cross-vehicle spring 26. The cross-vehicle spring 26 may be a torsion bar. The cross-vehicle spring 26 may be a z-bar. The cross-vehicle spring 26 comprises a first attachment point 27. The cross-vehicle spring 26 comprises a second attachment point 28. The cross-vehicle spring 26 runs between opposite sides of the longitudinal centreline 13 of the vehicle 1. The first attachment point 27 is located to one side of the longitudinal centreline 13 of the vehicle 1. The second attachment point 28 is located to the other side of the longitudinal centreline 13 of the vehicle. The first and second attachment points 27, 28 are located to opposite sides of the longitudinal centreline 13 of the vehicle 1. The first and second attachment points 27, 28 are located to either side of the longitudinal centreline 13 of the vehicle 1.

The first attachment point 27 is located proximal to a first end of the cross-vehicle spring 26. The second attachment point is located proximal to a second end of the cross-vehicle spring 26. The cross-vehicle spring 26 comprises a central portion 29 running across the vehicle 1. The central portion 29 runs across the longitudinal centreline 13 of the vehicle 1. The central portion 29 may be generally straight. The central portion 29 may include deviations in its shape as it runs across the vehicle 1. These deviations may be present for packaging reasons. For instance, to avoid other vehicle components.

The cross-vehicle spring 26 comprises a first connection portion 30 which comprises the first attachment point 27. The cross-vehicle spring 26 comprises a second connection portion 31 which comprises the second attachment point 28.

The first connection portion 30 is angled relative to the central portion 29. The first connection portion 30 projects from the central portion 29. The central portion 29 runs generally in a transverse direction across the vehicle 1. The first connection portion 30 runs in a direction different to the general direction that the central portion 29 runs in. The first connection portion 30 runs in a first direction. The first connection portion 30 is angled relative to the central portion 29 in a first direction. The first connection portion 30 runs in a generally longitudinal direction along the vehicle 1.

The second connection portion 31 is angled relative to the central portion 29. The second connection portion 31 projects from the central portion 29. The second connection portion 31 runs in a direction different to the general direction that the central portion 29 runs in. The second connection portion 31 runs in a second direction. The second connection portion 31 is angled relative to the central portion 29 in a second direction. The second connection portion 31 runs in a generally longitudinal direction along the vehicle 1. The second direction is opposite to the first direction. The first connection portion 30 is angled in an opposite direction to the second connection portion 31. The first and second connection portions 30, 31 are parallel to each other. The first and second connection portions 30, 31 are offset from each other along the lateral direction of the vehicle 1. The first and second connection portions 30, 31 are on opposite sides of the longitudinal centreline 13 of the vehicle 1. The first and second connection portions 30, 31 run in opposite directions.

The first and second connection portions 30, 31 are configured to move. The first connection portion 30 may be configured to rotate about a first axis defined by the central portion 29. The second connection portion 31 may be configured to rotate about a second axis defined by the central portion 29. A common rotation of the first and second connection portions 30, 31 causes the central portion 29 to rotate. A common rotation of the first and second connection portions 30, 31 causes the cross-vehicle spring 26 to rotate. Thus, a common rotation of the first and second connection portions 30, 31 does not permit the cross-vehicle spring 26 from applying a reaction force to be applied to the first and second connection portions 30, 31 by the central portion 29. An opposite rotation of the first and second connection portions 30, 31 causes a twisting of the central portion 29. An opposite rotation of the first and second connection portions 30, 31 causes a torque to be applied to the central portion 29 by the first and second connection portions 30, 31. The opposite rotation of the first and second connection portions 30, 31 causes a reaction force to be applied to the first and second connection portions 30, 31 by the central portion 29. The reaction force is a spring force caused by the twisting of the central portion 29.

The first attachment point 27 of the cross-vehicle spring 29 is coupled to the first suspension linkage 14. The second attachment point 28 of the cross-vehicle spring 29 is coupled to the second suspension linkage 15. The second attachment point 28 may be coupled to the second attachment point 28 by a fixed link 32. Thus, the vehicle 1 may comprise a fixed link 32. The fixed link 32 is a rod. The fixed link 32 runs between the second attachment point 28 and the second suspension linkage 15. The fixed link 32 is pivotally attached to the second suspension linkage 15. The fixed link 32 is pivotally attached to the second attachment point 28.

As discussed herein, the first damper 16 may be coupled to one of the first and second suspension links 14a, 14b of the first suspension linkage 14 and the second damper 17 may be coupled to one of the first and second suspension links 15a, 15b of the second suspension linkage 15. The first attachment point 27 of the cross-vehicle spring 29 may be coupled to the other of the first and second suspension links 14a, 14b of the first suspension linkage 14. The second attachment point 28 may be coupled to the other of the first and second suspension links 15a, 15b of the second suspension linkage 15.

The vehicle 1 comprises an active link 33. The active link 33 couples the first attachment point 27 of the cross-vehicle spring 26 to the first suspension linkage 14. The active link 33 runs between the first attachment point 27 and the first suspension linkage 14. The active link 33 is pivotally attached to the first attachment point 27 of the cross-vehicle spring 26. The active link 33 is pivotally attached to the first suspension linkage 14.

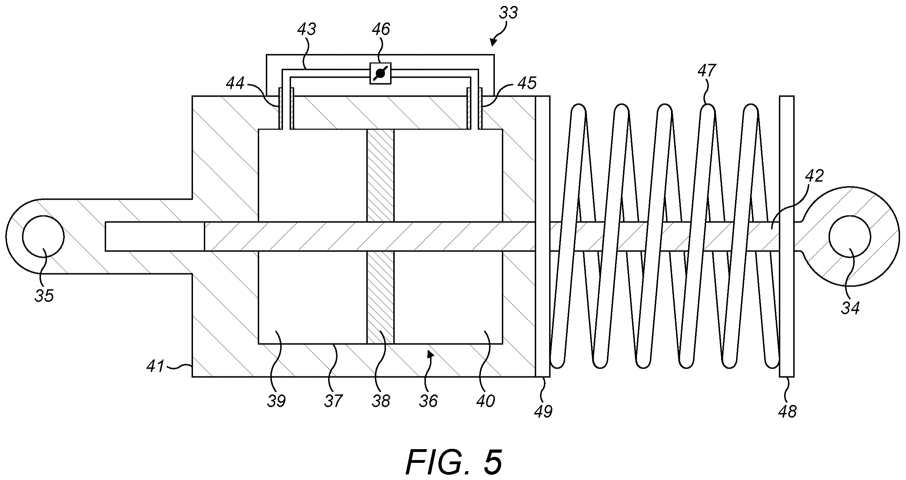

Figure 5 shows the active link 33 in more detail and includes a schematic representation of certain internal components of the active link 33.

The active link 33 comprises a first link attachment point 34. The first link attachment point 34 of the active link 33 permits connection to other elements of the suspension system 7. The active link 33 comprises a second link attachment point 35. The second link attachment point 35 permits connection to other elements of the suspension system 7. The active link 33 comprises a cylinder 36. The cylinder 36 comprises a chamber 37. The active link 33 comprises a piston 38 moveable along the chamber 37. The piston 38 divides the chamber 37 into a first volume 39 and a second volume 40.

The active link 33 comprises a link body 41. The cylinder 36 is disposed within linkage body 41. The second attachment point 34 is connected to the link body 41. The second attachment point 35 is formed as part of the link body 41. The second attachment point 35 may be a through hole in the link body 41. The active link 33 comprises a link rod 42. The link rod 42 is attached to the piston 39 so that movement of the linkage rod 42 causes a corresponding movement of the piston 39. The first link attachment point 34 is connected to link rod 42. The first link attachment point 34 is formed as part of the link rod 42. The first link attachment point 34 is a through hole in linkage rod 42. It will be appreciated that whilst the first link attachment point 34 has been described as being attached to link rod 42 and the second link attachment point 35 is attached to link body 41 the reverse could equally be the case. I.e. the second link attachment point 35 may be attached to link rod 42 and the first link attachment point 34 may be attached to link body 41.

The active link 33 comprises a fluid pathway 43. The fluid pathway 43 is connected between the first volume 39 and the second volume 40. The fluid pathway 43 directly connects the first volume 39 to the second volume 40. The active link 33 comprises a first outlet 44 connected to the first volume 39 to permit fluid to flow between the first volume 39 and the exterior of the chamber 37. The active link 33 comprises a second outlet 45 connected to the second volume 40 to permit fluid to flow between the second volume 40 and the exterior of the chamber 37. The fluid pathway 43 is connected to the first outlet 44 and the second outlet 45. The first outlet 44 is positioned so that it is connected to the first volume 39 irrespective of the position of the piston 38 within the chamber 37. The second outlet 45 is positioned so that it is connected to the second volume 40 irrespective of the position of the piston 38 within the chamber 37. The extent to which the piston 38 is capable of moving along the chamber 37 may be limited so that there is always a first and second volume 39, 40 present within the chamber 37.

The fluid pathway 43 comprises a variable restriction 46. The variable restriction 46 has a first mode in which the variable restriction 46 permits fluid to pass between the first volume 41 and the second volume 42. The variable restriction 46 has a first mode in which the variable restriction 46 permits fluid to pass between the first volume 39 and the second volume 40 via the fluid pathway 43. The variable restriction 46 has a second mode in which the variable restriction 46 prohibits fluid from passing between the first volume and the second volume. The variable restriction 46 has a second mode in which the variable restriction 46 prohibits fluid from passing between the first volume 39 and the second volume 40 via the fluid pathway 43.

The active link 31 may comprise a link spring 47. The link spring 47 contributes to the force generated by the active link 31 when the active link 31 has a variable length. The link spring 47 runs between a first spring seat 48 attached to the link rod 42 and a second spring seat 49 attached to the link body 41. The link spring 47 can thus apply force to the two spring seats 47, 48 which in turn contributes to the force generated by the active link 31 when the active link 31 has a variable length. The link spring 47 contributes to the first spring rate.

The active link 31 is configured to have two modes of operation.

The active link 31 is configured to have a first mode in which the active link 31 permits motion of the first suspension linkage 14 relative to the first attachment point 27 of the cross-vehicle spring 26. This is so that in the first mode the cross-vehicle spring 26 and active link 31 together constrain the motion of the first and second suspension linkages 14, 15 during common motion of the first and second suspension linkages 14, 15. The cross-vehicle spring 26 and active link 31 do so in the first mode with a first spring rate during common motion of the first and second suspension linkages 14, 15. The active link 31 has a variable length between the first and second link attachment points 34, 35 in the first mode. In the first mode, the variable restriction 46 permits fluid to pass between the first volume 39 and the second volume 40. Thus, when the active link 31 is operating in the first mode the variable restriction 46 is operating in the first mode of the variable restriction 46.

The active link 31 is configured to have a second mode in which the active link 31 fixes the motion of the first suspension linkage 14 relative to the first attachment point 27. This is so that in the second mode the cross-vehicle spring 26 and the active link 33 together constrain the motion of the first and second suspension linkages 14, 15 during common motion of the first and second suspension linkages 14, 15. The cross-vehicle spring 26 and active link 31 do so in the second mode with a second spring rate during common motion of the first and second suspension linkages 14, 15. The active link 31 has a fixed length between the first and second link attachment points 34, 35 in the second mode. In the second mode, the variable restriction 46 prohibits fluid from passing between the first volume 39 and the second volume 40. Thus, when the active-link 31 is operating in the second mode the variable restriction 46 is operating in the second mode of the variable restriction 46.

The first and second spring rates are different. This permits the vehicle 1 to have different levels of stiffness when there is common motion of the first and second suspension linkages 14, 15 when operating in the first mode as compared to the second mode. The common motion of the first and second suspension linkages 14, 15 is a vehicle heave motion. A vehicle heave motion is where the vehicle motion is in a direction perpendicular to the running surface of the vehicle 1. The heave motion may be a movement of the whole vehicle relative to the running surface of the vehicle 1. The heave motion may be a movement of one end of the vehicle relative to the running surface of the vehicle 1.

When the active link 33 is operating in the first mode, the motion of the first suspension linkage 14 relative to the first attachment point 27 permits the link spring 47 to constrain the motion of the first and second suspension linkages 14, 15. In the first mode, the active link 33 has a variable length which means that the link spring 47 is subjected to changes in the length of the link spring 47. This change in length of the link spring 47 causes the link spring 47 to exert force on the link attachment points 34, 35 of the active link 33. This variable length permits the link spring 47 to constrain the motion of the first and second suspension linkages 14, 15. The constraint that the link spring 47 provides is during a common motion of the first and second suspension linkages 14, 15.

When the active link 33 is operating in the second mode, the fixed motion of the first suspension linkage 14 relative to the first attachment point 27 prohibits the link spring 47 from constraining the motion of the first and second suspension linkages 14, 15. The fixed length between the first and second link attachment points prohibits the link spring 47 from constraining the motion of the first and second suspension linkages 14, 15. In the second mode, the active link 33 has a fixed length which means that the link spring 47 is not subjected to any change in length. This means that the link spring 47 is unable to exert force on the link attachment points 34, 35 of the active link 33. This fixed length prohibits the link spring 47 from constraining the motion of the first and second suspension linkages 14, 15.

The cross-vehicle spring 26 has a third spring rate. The link spring 47 has a fourth spring rate. The first spring rate is a combination of the third and fourth spring rates. The cross-vehicle spring 26 and the link spring 47 are in series. Therefore, the combination of the two spring rates may be the product of the two spring rates divided by the sum of the two spring rates. In this case, first spring rate may be the product of the third and fourth spring rates divided by the sum of the third and fourth spring rates. The first spring rate may be calculated by:

$$k_1 = \frac{k_2 k_3}{k_2 + k_3}$$

where $k_1$ is the first spring rate, $k_2$ is the second spring rate and $k_3$ is the third spring rate.

The second spring rate may be formed from the third spring rate. The second spring rate may be the third spring rate.

As described herein, the cross-vehicle spring 26 rotates about its length along the central portion 29 during common rotation of the first and second connection portions. Therefore, the cross-vehicle spring 26 permits opposite motion of the first and second suspension linkages 14, 15 without the cross-vehicle spring 26 and active link 33 together constraining the first and second suspension linkages 14, 15. In the first mode, the cross-vehicle spring permits opposite motion of the first and second suspension linkages 14, 15 without the cross-vehicle spring 26 and active link 33 together constraining the first and second suspension linkages 14, 15 with the first spring rate. In the second mode, the cross-vehicle spring permits opposite motion of the first and second suspension linkages 14, 15 without the cross-vehicle spring 26 and active link 33 together constraining the first and second suspension linkages 14, 15 with the second spring rate. The opposite motion is a vehicle roll motion. A vehicle roll motion is where the vehicle motion is rotating about the longitudinal direction 13 of the vehicle 1.

The vehicle 1 may experience both a heave motion and a roll motion at the same time. In this case, the cross-vehicle spring 26 and active link 33 together provide constraint for the part of the motion that is in heave. In this case, the cross-vehicle spring 26 and active link 33 permits the part of the motion that is in roll without providing constraint to that part of the motion.

The vehicle 1 comprises one or more control units 50 configured to control vehicle functions. The control unit 50 may be a suspension controller 50. The control unit 50 is connected to various suspension components. For instance, the control unit 50 is connected to the first damper 16, the second damper 17 and the active link 33. The control unit 50 may be connected to one or more pumps 51. The one or more pumps 51 are configured to pump hydraulic fluid. The one or more pumps 51 may be connected to one or more of the first damper 16, and the second damper 17. The vehicle 1 may comprise one or more hydraulic circuits connected between one or more of the first damper 16 and the second damper 17 and the one or more pumps 51. The control unit 50 may be configured to control one or more of the variable restriction 46, the one or more pumps 53, and the actuator 25.

The control unit 50 may comprise a processor 52 and memory 53. The memory 53 may be non-volatile memory. The control unit 50 may be formed as a more general vehicle control unit. This vehicle control unit may control various vehicle functions. Those vehicle functions may be the ones in the vicinity of the control unit. The control unit 50 may comprise more than one processor and more than one memory. The memory stores a set of program instructions that are executable by the processor, and reference data such as look-up tables that can be referenced by the processor in response to those instructions. The processor may be configured to operate in accordance with a computer program stored in non-transitory form on a machine-readable storage medium. The computer program may store instructions for causing changes in the operation of the suspension system as described herein.

The vehicle 1 may be configured to operate in a first dynamic mode and a second dynamic mode. The dynamic modes are vehicle operating modes which set various vehicle components to particular operating parameters. The control unit 50 may be configured to set the suspension system into the first dynamic mode and the second dynamic mode. The control unit 50 may be responsive to a user input to select whether the vehicle 1 is in the first dynamic mode or second dynamic mode. The first dynamic mode may be a normal dynamic mode. The first dynamic mode may be a comfort dynamic mode. The first dynamic mode may prioritise passenger comfort over vehicle performance. The second dynamic mode may be a race mode. The second dynamic mode may be a track mode. The second dynamic mode may prioritise vehicle performance over passenger comfort.

The control unit 50 may be configured to set the active link 33 to operate in the first mode. The control unit 50 may be configured to set the active link 33 to operate in the first mode when the vehicle 1 is set to the first dynamic mode. The control unit 50 may be configured to set the active link 33 to operate in the second mode. The control unit 50 may be configured to set the active link 33 to operate in the second mode when the vehicle 1 is set to the second dynamic mode. The control unit 50 may be configured to set the variable restriction 46 to the first mode when the vehicle 1 is set to the first dynamic mode. The control unit 50 may be configured to set the variable restriction 46 to the second mode when the vehicle 1 is set to the second dynamic mode.

The first and second dampers may have a first length in the first dynamic mode and a second length in the second dynamic mode. The first length may be longer than the second length. The control unit 50 may be configured to cause the first and second dampers 16, 17 to change length between the first length and the second length in dependence on the dynamic mode. The control unit 50 may be configured to set the first and second dampers 16, 17 to the first length in the first dynamic mode. The control unit 50 may be configured to set the first and second dampers 16, 17 to the second length in the second dynamic mode. The control unit 50 may be configured to cause the actuator 25 to change the position of the second spring seat 22 of each damper 16, 17. The control unit 50 may be configured to cause the first and second dampers 16, 17 to change the amount of fluid present to each side of the one or more pistons present inside the damper. The control unit 50 may be configured to control one or more valve present on the damper and the one or more pumps connected to the damper 16, 17 to adjust the position of the pistons.

The change in damper length causes a change in ride height of the vehicle 1. The vehicle 1 may have a first ride height in the first dynamic mode. The vehicle 1 may have a second ride height in the second dynamic mode. The second ride height may be less than the first ride height.

To permit the first and second dampers to move from the second length to the first length the control unit 50 may be configured to cause the variable restriction 46 to open (if presently shut) to permit fluid to flow from the second volume 40 to the first volume 39. To permit the first and second dampers 16, 17 to move from the first length to the second length the control unit 52 may be configured to cause the variable restriction 47 to open (if presently shut) to permit fluid to flow from the first volume to the second volume. This permits the piston 39 to move along the chamber 38 in response to the change in length of the dampers. If moving to the second dynamic mode then after the first and second dampers reach the second length then the control unit 52 may be configured to cause the variable restriction 46 to shut.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

ANNEX TO THE DESCRIPTION

1. A vehicle comprising:

   a vehicle body;
   first and second wheel assemblies each having a rotation axis;
   first and second suspension linkages, each suspension linkage coupling a respective wheel assembly to the vehicle body to permit motion of the rotation axis of that wheel assembly relative to the vehicle body;
   a cross-vehicle spring having a first attachment point coupled to the first suspension linkage and a second attachment point coupled to the second suspension linkage;
   an active link coupling the first attachment point to the first suspension linkage, the active link being configured to have:

      (i) a first mode in which the active link permits motion of the first suspension linkage relative to the first attachment point so that the cross-vehicle spring and the active link together constrain motion of the first and second suspension linkages with a first spring rate during common motion of the first and second suspension linkages; and
      (ii) a second mode in which the active link fixes the motion of the first suspension linkage relative to the first attachment point so that the cross-vehicle spring and the active link together constrain motion of the first and second suspension linkages with a second spring rate during common motion of the first and second suspension linkages;

   wherein the first spring rate is different to the second spring rate.

2. A vehicle according to 1, wherein the first spring rate is lower than the second spring rate.

3. A vehicle according to 1 or 2, wherein the first and second wheel assemblies are rear wheel assemblies and are located on opposite sides of a longitudinal centreline of the vehicle.

4. A vehicle according to any of 1 to 3, the vehicle comprising a fixed link coupling the second attachment point to the second suspension linkage.

5. A vehicle according to any of 1 to 4, wherein the cross-vehicle spring is a torsion bar.

6. A vehicle according to any of 1 to 5, wherein the cross-vehicle spring comprises: a central portion running across the vehicle; a first connection portion angled relative to the central portion in a first direction, the first connection portion comprising the first attachment point; and a second connection portion angled relative to the central portion in a second direction, the second connection portion comprising the second attachment point.

7. A vehicle according to 6, wherein a common rotation of the first and second connection portions causes the central portion of rotate.

8. A vehicle according to 6 or 7, wherein an opposite rotation of the first and second connection portions causes a reaction force to be applied to the first and second connection portions by the central portion.

9. A vehicle according to any of 6 to 8, wherein the first and second directions are opposite.

10. A vehicle according to any of 1 to 9, wherein the cross-vehicle spring is a z-bar.

11. A vehicle according to any of 1 to 10, wherein the first attachment point is coupled to a first link attachment point of the active link and the first suspension linkage is coupled to a second link attachment point of the active link; in the first mode the active link has a variable length between the first and second link attachment points and in the second mode the active link has a fixed length between the first and second link attachment points.

12. A vehicle according to any of 1 to 11, the active link comprises: a cylinder comprising a chamber; a piston moveable along the chamber, the piston dividing the chamber into a first volume and a second volume; and a fluid pathway connected between the first volume and the second volume, the fluid pathway comprising a variable restriction so that in the first mode the variable restriction permits fluid to pass between the first volume and the second volume and in the second mode the variable restriction prohibits fluid from passing between the first volume and the second volume.

13. A vehicle according to any of 1 to 12, the active link comprising a link spring.

14. A vehicle according to claim 13, wherein in the first mode the motion of the first suspension linkage relative to the first attachment point permits the link spring to constrain motion of the first and second suspension linkages.

15. A vehicle according to 13 or 14 as dependent on 11, wherein in the first mode the variable length between the first and second link attachment points permits the link spring to constrain motion of the first and second suspension linkages.

16. A vehicle according to any of 13 to 15 as dependent on 11, wherein in the second mode the fixed length between the first and second link attachment points prohibits the link spring from constraining the motion of the first and second suspension linkages.

17. A vehicle according to any of 13 to 16, wherein the cross-vehicle spring has a third spring rate, the link spring has a fourth spring rate, and the first spring rate is a combination of the third and fourth spring rates.

18. A vehicle according to any of 1 to 17, wherein the cross-vehicle spring has a third spring rate, and the second spring rate is formed from the third spring rate.

19. A vehicle according to any of 1 to 18, the vehicle comprising first and second dampers, each damper being coupled to a respective suspension linkage to constrain the motion of the associated wheel assembly by applying a damper force to the suspension linkage.

20. A vehicle according to 19, wherein each damper is coupled between a respective suspension linkage and the vehicle body.

21. A vehicle according to 19 or 20, wherein each suspension linkage comprises first and second suspension links, each suspension link couples the respective wheel assembly to the vehicle body, the first damper is coupled to one of the first and second suspension links of the first suspension linkage, the first attachment point is coupled to the other of the first and second suspension links of the first suspension linkage, the second damper is coupled to one of the first and second suspension links of the second suspension linkage, and the second attachment point is coupled to the other of the first and second suspension links of the second suspension linkage.

22. A vehicle according to any of 19 to 21, wherein each damper comprises a damper spring contributing to the damper force applied by the damper, a first spring seat and a second spring seat, the damper spring running between the first spring seat and the second spring seat.

23. A vehicle according to any of 22, wherein the second spring seat is adjustable between a raised position and a lowered position, and the vehicle is configured to cause the second spring seat to be in the raised position when the active link is in the first mode and the vehicle is configured to cause the second spring seat to be in the lowered position when the active link is in the second mode.

24. A vehicle according to any of 1 to 23, wherein the cross-vehicle spring runs between opposite sides of a longitudinal centreline of the vehicle.

25. A vehicle according to any of 1 to 24, wherein the first and second attachment points are to either side of a longitudinal centreline of the vehicle.

26. A vehicle according to any of 1 to 25, wherein the common motion is a vehicle heave motion.

27. A vehicle according to any of 1 to 26, wherein in the first mode the cross-vehicle spring permits opposite motion of the first and second suspension linkages without the cross-vehicle spring and active link together constraining the first and second suspension linkages with the first spring rate.

28. A vehicle according to any of 1 to 27, wherein in the second mode the cross-vehicle spring permits opposite motion of the first and second suspension linkages without the cross-vehicle spring and active link together constraining the first and second suspension linkages with the second spring rate.

29. A vehicle according to 27 or 28, wherein the opposite motion is a vehicle roll motion.

**Claims**

1. A vehicle comprising:

   a vehicle body;
   first and second wheel assemblies each having a rotation axis;
   first and second suspension linkages, each suspension linkage coupling a respective wheel assembly to the vehicle body to permit motion of the rotation axis of that wheel assembly relative to the vehicle body;
   a cross-vehicle spring having a first attachment point coupled to the first suspension linkage and a second attachment point coupled to the second suspension linkage;
   an active link coupling the first attachment point to the first suspension linkage, the active link being configured to have:

      (i) a first mode in which the active link permits motion of the first suspension linkage relative to the first attachment point so that the cross-vehicle spring and the active link together constrain motion of the first and second suspension linkages with a first spring rate during common motion of the first and second suspension linkages; and
      (ii) a second mode in which the active link fixes the motion of the first suspension linkage relative to the first attachment point so that the cross-vehicle spring and the active link together constrain motion of the first and second suspension linkages with a second spring rate during common motion of the first and second suspension linkages;

   wherein the first spring rate is different to the second spring rate.

2. A vehicle according to claim 1, wherein the first spring rate is lower than the second spring rate.

3. A vehicle according to claim 1 or 2, wherein the first and second wheel assemblies are rear wheel assemblies and are located on opposite sides of a longitudinal centreline of the vehicle.

4. A vehicle according to any preceding claim, wherein the cross-vehicle spring is a torsion bar.

5. A vehicle according to any preceding claim, wherein the cross-vehicle spring comprises: a central portion running across the vehicle; a first connection portion angled relative to the central portion in a first direction, the first connection portion comprising the first attachment point; and a second connection portion angled relative to the central portion in a second direction, the second connection portion comprising the second attachment point; wherein optionally a common rotation of the first and second connection portions causes the central portion of rotate; wherein optionally an opposite rotation of the first and second connection portions causes a reaction force to be applied to the first and second connection portions by the central portion.

6. A vehicle according to claim 5, wherein the first and second directions are opposite.

7. A vehicle according to any preceding claim, wherein the cross-vehicle spring is a z-bar.

8. A vehicle according to any preceding claim, wherein the first attachment point is coupled to a first link attachment point of the active link and the first suspension linkage is coupled to a second link attachment point of the active link; in the first mode the active link has a variable length between the first and second link attachment points and in the second mode the active link has a fixed length between the first and second link attachment points; and optionally the active link comprises: a cylinder comprising a chamber; a piston moveable along the chamber, the piston dividing the chamber into a first volume and a second volume; and a fluid pathway connected between the first volume and the second volume, the fluid pathway comprising a variable restriction so that in the first mode the variable restriction permits fluid to pass between the first volume and the second volume and in the second mode the variable restriction prohibits fluid from passing between the first volume and the second volume.

9. A vehicle according to any preceding claim, the active link comprising a link spring.

10. A vehicle according to claim 9, wherein in the first mode the motion of the first suspension linkage relative to the first attachment point permits the link spring to constrain motion of the first and second suspension linkages.

11. A vehicle according to claim 9 or 10 as dependent on claim 8, wherein in the first mode the variable length between the first and second link attachment points permits the link spring to constrain motion of the first and second suspension linkages; and wherein in the second mode the fixed length between the first and second link attachment points prohibits the link spring from constraining the motion of the first and second suspension linkages.

12. A vehicle according to any of claims 9 to 11, wherein the cross-vehicle spring has a third spring rate, the link spring has a fourth spring rate, and the first spring rate is a combination of the third and fourth spring rates.

13. A vehicle according to any preceding claim, wherein the cross-vehicle spring has a third spring rate, and the second spring rate is formed from the third spring rate.

14. A vehicle according to any preceding claim, the vehicle comprising first and second dampers, each damper being coupled to a respective suspension linkage to constrain the motion of the associated wheel assembly by applying a damper force to the suspension linkage; and wherein optionally each damper is coupled between a respective suspension linkage and the vehicle body.

15. A vehicle according to any preceding claim, wherein the common motion is a vehicle heave motion.

16. A vehicle according to any preceding claim, wherein in the first mode the cross-vehicle spring permits opposite motion of the first and second suspension linkages without the cross-vehicle spring and active link together constraining the first and second suspension linkages with the first spring rate; wherein in the second mode the cross-vehicle spring permits opposite motion of the first and second suspension linkages without the cross-vehicle spring and active link together constraining the first and second suspension linkages with the second spring rate; and wherein the opposite motion is a vehicle roll motion.

FIG. 1

EP 4 717 475 A1

FIG. 2

*FIG. 3*

*FIG. 4*

FIG. 5

## EUROPEAN SEARCH REPORT

Europäisches
Patentamt
European
Patent Office
Office européen
des brevets

**Application Number**

EP 25 20 5376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 505 480 A (PASCARELLA ROBERT J [US]) 9 April 1996 (1996-04-09) * the whole document * | 1-16 | INV. B60G3/20 B60G21/05 B60G21/055 |

TECHNICAL FIELDS
SEARCHED      (IPC)

B60G

The present search report has been drawn up for all claims

| Place of search | Date of completion of the search | Examiner |
|---|---|---|
| The Hague | 16 February 2026 | Savelon, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 5376

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2026

| Patent document cited in search report | Publication date | Patent family member(s) | Publication date |
|---|---|---|---|
| US 5505480 A | 09-04-1996 | NONE | |

For more details about this annex : see Official Journal of the European Patent Office, No. 12/82